## Europäisches Patentamt

## European Patent Office

## Office européen des brevets

(11) Publication number: **0 194 034**
**B1**

(12) **EUROPEAN PATENT SPECIFICATION**

(45) Date of publication of patent specification: **07.02.90**

(21) Application number: **86300715.9**

(22) Date of filing: **03.02.86**

(51) Int. Cl.⁵: **F 16 L 55/16**

(54) Pipe repair clamp.

(30) Priority: **18.02.85 GB 8504083**

(43) Date of publication of application:
**10.09.86 Bulletin 86/37**

(45) Publication of the grant of the patent:
**07.02.90 Bulletin 90/06**

(84) Designated Contracting States:
**BE DE FR IT NL**

(56) References cited:
**EP-A-0 132 192**
**EP-A-0 133 660**
**GB-A-2 119 893**
**US-A-1 659 196**

(73) Proprietor: **British Gas Corporation**
**Rivermill House 152 Grosvenor Road**
**London SW1V 3JL (GB)**

(72) Inventor: **Munday, Keith**
**27 Brackley Road**
**Chiswick London W4 (GB)**

(74) Representative: **Morgan, David James**
**British Gas Corporation Patents Department 326**
**High Holborn**
**London WC1V 7PT (GB)**

Courier Press, Leamington Spa, England.

## Description

The present invention relates to a pipe repair clamp.

When a fluid-carrying pipe such as a gas or water main develops a leak caused by the presence of a crack or defect in the surface of the pipe, it is in some cases possible to arrest the leak by clamping around the pipe a so-called pipe repair clamp adapted to seal the surface of the pipe against further leakage.

US—A—1659196 discloses a pipe clamp for repairing leaks in pipes. The clamp comprises a band formed in two semi-cylindrical sections which are adapted to be bolted together endwise by means of adjoining lugs located on adjacent ends of the sections. The band sections are provided with continuous circular and concave grooves adjacent their outer edges. The grooves form seats for packing elements such as a layer of rope or the like which elements are secured within the grooves. In use, the elements engage with the outermost surface of the pipe when the band is clamped around the pipe so that a sealed enclosure is formed between the elements.

GB—A—2119893 discloses a pipe repair clamp for repairing leaks in pipes. The clamp comprises a pipe collar having two generally semi-cylindrical flexible metal portions for location about the pipe to be repaired, connectors for securing the two collar portions together, high tensile strength bridging pieces for linking the two collar portions about the pipe and a gasket member arranged within the collar for providing a seal between the outside wall of the pipe and the edges of the collar portions.

The present invention has for its object the provision of a pipe-repair clamp which is of a simplified construction compared to existing clamps yet being capable of use with pipes of slightly varying external diameters.

According to the present invention a pipe repair clamp comprises a two-piece split collar, the collar being formed by joining the two pieces (1) together about the surface of the pipe to be repaired, the pieces (1) being so shaped that at the joints (5) the internal surface of one piece (1) overlaps the external surface of the other piece (1), there being a gasket arranged within the collar to seal the surface of the pipe from the outside of the collar, each collar piece (1) having affixed to its internal surface a portion (12) of the gasket, each gasket portion (12) being in strip form, characterised in that each gasket portion (12) has ends which are overlapped by the adjoining gasket portion (12) so that the portions (12) form a single sealed enclosure between the surface of the pipe and the internal surface of the pieces, the enclosure extending over the whole circumference of the pipe.

An embodiment of the invention will now be described by way of the example with reference to the accompanying drawings in which:

Figure 1 is a view of the clamp as seen from the front and slightly to one side when the pieces are joined together, and

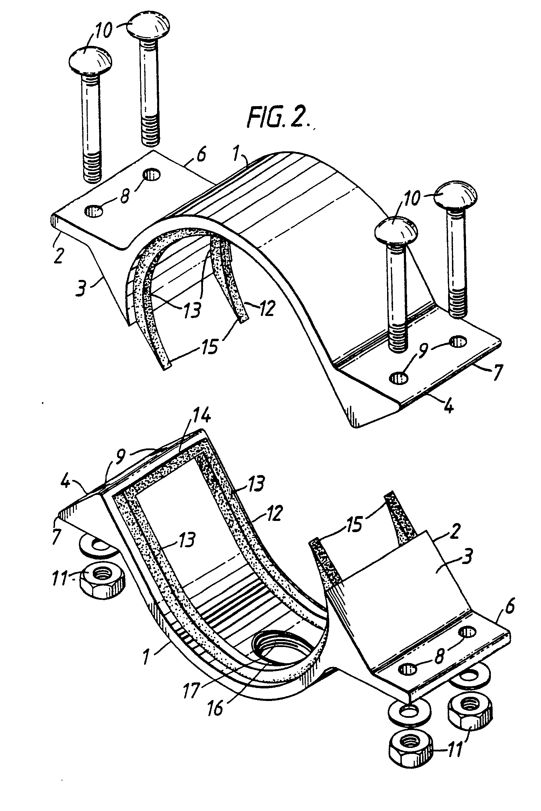

Figure 2 is an exploded isometric view of the two piece repair clamp in accordance with the present invention.

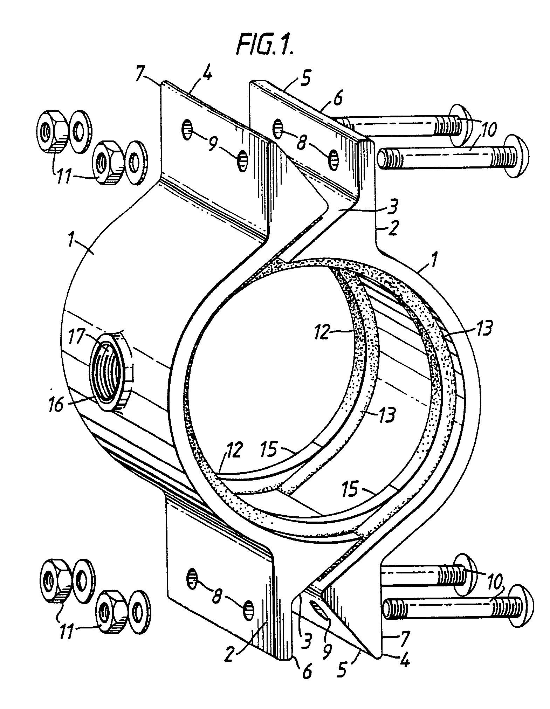

Referring to the drawings the clamp comprises a two-piece type split collar having two identical pieces 1 of metal, for example steel, or of a rigid plastic material. Each piece 1 is generally part-circular in shape and is provided at one end 2 with a flat face 3 forming part of the external surface of the piece 1. The other end 4 of each piece 1 extends somewhat tangentially from the rest of the piece 1 and has an internal surface, in use, for overlapping the flat face 3 of the other piece 1 as shown in Figure 1 whereby to form a scarf-type joint 5.

Each end 2 of each piece 1 is also formed with a lug 6 located between the face 3 and the rest of the piece 1.

The other end 4 of each piece 1 is also formed with a lug 7 and the lugs 6 and 7 each have a pair of corresponding apertures 8 and 9 so that the pieces 1 may be connected together by means of nut and bolt assemblies 10, 11.

The collar is provided with a gasket taking the form of two identical portions 12, each piece 1 being provided with a gasket portion 12 which is affixed in any convenient manner to the internal surface of the piece 1.

The gasket portions 12 comprise integral strips of resilient material such as synthetic rubber, each strip having a section 13 adjoining each circumferential edge of the piece 1 and a section 14 adjoining the end 4.

The sections 13 have ends 15 which extend slightly beyond the face 3 and are tapered so as to be overlapped by the sections 13 of an adjoining strip when the collar pieces 1 are clamped together as shown in Figure 1.

When the collar pieces 1 are clamped together about the surface of a pipe, the gasket portions 12 form a sealed enclosure between the surface of the pipe and the internal surface of the pieces 1. That section of a gasket portion 14 attached to the tangential side 4 of each piece 1 will of course be clamped against the flat face end 3 of the other piece 1 so that escape of fluid through a joint 5 will be prevented.

One or both of the pieces 1 is provided with a boss 16 on its outer surface which is drilled and tapped to provide a tapped aperture 17 for connecting the coller piece 1 to an outlet pipe or tee. When not used for this purpose the aperture may be plugged and sealed. Where the piece is of plastics material the tapped aperture may be provided by a metal stub pipe insert held in an aperture in the piece. Alternatively the clamp may be supplied with the boss undrilled and untapped, drilling and tapping of the boss being carried out as and when required.

Because the collar pieces are connected together by scarf-joints, it will be possible to use the collar on pipes with slightly varying external diameters.

## Claims

1. A pipe clamp comprising a two-piece split collar, the collar being formed by joining the two pieces (1) together about the surface of the pipe to be repaired, the pieces (1) being so shaped that at the joints (5) the internal surface of one piece (1) overlaps the external surface of the other piece (1) there being a gasket arranged within the collar to seal the surface of the pipe from the outside of the collar, each collar piece (1) having affixed to its internal surface a portion (12) of the gasket, each gasket portion (12) being in strip form, characterised in that each gasket portion (12) has ends which are overlapped by the adjoining gasket portion (12) so that the portions (12) form a single sealed enclosure between the surface of the pipe and the internal surface of the pieces, the enclosure extending over the whole circumference of the pipe.

2. A pipe clamp as claimed in claim 1, characterised in that each gasket portion (12) comprises an integral strip.

3. A pipe clamp as claimed in claim 2, characterised in that part of the strip is clampable in the overlap between the collar pieces (1) at the joints (5).

4. A pipe clamp as claimed in any of claims 1 to 3, characterised in that at least one collar piece (1) is adapted for connecting the collar to a pipe or tee.

## Patentansprüche

1. Rohrschelle mit einer zweistückigen gespaltenen Manschette, die durch Verbinden der beiden Stücke (1) um die Oberfläche des zu reparierenden Rohres gebildet ist, wobei die Stücke (1) so gestaltet sind, daß an den Verbindungen (5) die Innenoberfläche des einen Stückes (1) die Außenoberfläche des anderen Stückes (1) überlappt, wobei eine Dichtung innerhalb der Manschette angeordnet ist, um die Oberfläche des Rohres gegenüber der Außenseite der Manschette abzudichten, wobei an der Innenfläche jedes Manschettenstückes (1) ein Teilstück (12) der Dichtung befestigt ist, und wobei jedes Dichtungsteilstück (12) streifenförmig ausgebildet ist, dadurch gekennzeichnet, daß jedes Dichtungsteilstück (12) Enden aufweist, die vom angrenzenden Dichtungsteilstück (12) überlappt sind, so daß die Teilstücke (12) eine einzige dichte Hülle zwischen der Oberfläche des Rohres und der Innenfläche der Stücke bilden, wobei sich die Hülle über den gesamten Umfang des Rohres erstreckt.

2. Rohrschelle nach Anspruch 1, dadurch gekennzeichnet, daß jedes Dichtungsteilstück (12) aus einem einstückigen Streifen besteht.

3. Rohrschelle nach Anspruch 2, dadurch gekennzeichnet, daß ein Teil des Streifens in der Überlappung zwischen den Manschettenstücken (1) an den Verbindungen (5) verklemmbar ist.

4. Rohrschelle nach einem der Ansprüche 1 bis 3, dadurch gekennzeichnet, daß zumindest das eine Manschettenstück (1) zum Verbinden der Manschette mit einem Rohr oder T-Stück eingerichtet ist.

## Revendications

1. Collier pour tuyau comprenant un manchon fendu en deux pièces, le manchon étant formé par la jonction des deux pièces (1) l'une à l'autre autour de la surface du tuyau à réparer, les pièces (1) étant configurées de manière qu'aux joints (5), la surface intérieure d'une pièce (1) recouvre la surface extérieure de l'autre pièce (1), une garniture étant agencée à l'intérieur du manchon pour protéger de façon hermétique la surface du tuyau de l'extérieur du manchon, chaque pièce (1) de manchon comportant, fixée à sa surface intérieure, une partie (12) de la garniture, chaque partie (12) de garniture étant et forme de bande, caractérisé en ce que chaque partie (12) de garniture comporte des extrémités qui sont recouvertes par la partie de garniture contiguë (12) afin que les parties (12) forment une enceinte unique fermée hermétiquement entre la surface du tuyau et la surface intérieure des pièces, l'enceinte s'étendant sur toute la circonférence du tuyau.

2. Collier pour tuyau selon la revendication 1, caractérisé en ce que chaque partie de garniture (12) comprend un ruban d'une seule pièce.

3. Collier pour tuyau selon la revendication 2, caractérisé en ce qu'une partie du ruban peut être serrée sur le recouvrement entre les pièces de manchon (1) aux joints (5).

4. Collier pour tuyau selon l'une quelconque des revendications 1 à 3, caractérisé en ce qu'au moins une pièce (1) de manchon est conçue pour raccorder le manchon à un tuyau ou un té.

FIG.1.

FIG. 2.